# EUROPEAN PATENT SPECIFICATION

(11) **EP 4 410 617 B1**
(45) Date of publication and mention of the grant of the patent: **12.03.2025**
(21) Application number: 23154730.8
(22) Date of filing: 02.02.2023
(51) Int. Cl.: B60T 17/08, F16D 65/18, F16D 65/28

(54) **PNEUMATIC BRAKE ACTUATOR AND PUSHROD BOOT FOR SUCH ACTUATOR**
PNEUMATISCHER BREMSAKTUATOR UND STÖSSELMANSCHETTE FÜR EINEN SOLCHEN AKTUATOR
ACTIONNEUR DE FREIN PNEUMATIQUE ET SOUFFLET DE TIGE DE POUSSÉE POUR UN TEL ACTIONNEUR

(43) Date of publication of application: 07.08.2024
(73) Proprietor: ZF CV Systems Europe BV, 1170 Brüssel (BE)
(72) Inventor: STRZALA, Wieslaw, 46-220 Byczyna (PL)
(74) Representative: Ohlendorf, Henrike

(56) References cited:
- EP-A1- 0 692 651
- EP-B1- 1 791 742
- US-A1- 2014 096 678

## Description

### Pneumatic brake actuator and pushrod boot for such actuator

The invention relates to a pneumatic brake actuator for a vehicle, in particular a commercial vehicle, comprising an actuator housing having a pressure chamber and a piston chamber, a piston that is mounted inside the piston chamber and configured to reciprocatingly move between a retained position and extended position as a function of pressure inside the pressure chamber, a piston rod connected to the piston, wherein said piston rod is guided through the actuator housing via a rod opening, a compression spring being effective to push the piston towards the retained position and a rod boot for sealing the rod opening, wherein said rod boot is connected to the rod opening and the piston rod, said rod boot comprising a mantle, said mantle having a first section and a second section opposite from the first section and wherein the first section is connected to the rod opening and the section is connected to a mounting section of the piston rod.

Pneumatic brake actuators of the aforementioned kind are commonly used in the commercial vehicle industry. It is the aim of such pneumatic brake actuator to generate a braking force which is, in turn, transmitted to the vehicle wheel. A pneumatic brake actuator according to the state of the art is known from EP 0 692 651 A1.

State of the art pneumatic brake actuator comprise a housing which comprises a pressure chamber and a piston chamber having a piston mounted therein. The piston is configured to reciprocatingly move between a retained position and an extended position as a function of pressure inside the pressure chamber. The piston is connected to a piston rod which is guided through an out of the actuator housing via a rod opening.

To ensure that the interior of the brake caliper remains free from contamination, for example dirt or water, a rod boot is utilized for sealing the rod opening. The rod boot is connected to the rod opening and the piston rod.

Although such actuators are commonly used and well-proven, there is still room for improvement. One major drawback associated with these kinds of actuators is that the actuator housing needs to provide an accommodation volume for accommodating the rod boot, in particular when the piston is in its extended position and the rod boot is compressed. Furthermore, the compressed rod boot generates a counterforce acting towards the retained position which needs to be overcome by an additional degree of pressure inside the pressure chamber. When the pressure inside the pressure chamber is limited, the maximum stroke of the piston rod might not be available due to the above.

As a consequence, it was an object of the invention to provide a pneumatic brake actuator of the initially mentioned type which overcomes the aforementioned problems as much as possible. In particular, it was an object of the invention to provide a pneumatic brake actuator which comprises a smaller total length and requires less actuation pressure to operate the piston rod into its maximum stroke position.

The invention attains the aforementioned object by suggesting a pneumatic brake actuator according to claim 1. According to the invention, it is proposed that the second section of the rod boot is inverted inwardly relative to the first section, wherein a longitudinal dimension of the first section and a longitudinal dimension of the second section vary with respect to each other as a function of a relative position of the first section to the second section.

The invention is based upon the finding that by utilizing a rod boot having one section inverted inwardly relative to the other section, the rod boot is moved with the respective section of the piston rod out of the actuator housing when the piston rod is moved into its extended position. Thus, the rod boot requires a considerable less installation volume within the actuator housing. Furthermore, due to the rod boot design, no counterforce is generated when the piston rod is in the extended position, since the rod boot would not be compressed inside the actuator housing. For a given pressure inside the pressure chamber, this results in a better output regarding the maximum extended position, also called "maximum stroke". Furthermore, the new design allows for a reduction of the overall length of the actuator.

According to a preferred embodiment, the rod boot extends out of the actuator housing through the rod opening, when the piston is moved towards its retained position.

According to a preferred embodiment, a diameter of the mantle tappers from the first section to the second section. This ensures that the length of the first section and the second section can vary as a function of the relative position of the first section of the second section without substantial friction between the sections.

Preferably, the mantle comprises a varying thickness. The thickness of the mantle can be used as another means to ensure that the first section and the second section can be moved conveniently with regard to one another. Moreover, the thickness of the mantle may be locally increased for those sections of the mantle that are heavily stressed during operation. Furthermore, the stiffness of certain sections of the mantle may be adjusted as required.

According to yet another preferred embodiment, the mantle comprises at least one rib. The rib is used to adjust the stiffness of the mantle. This is in particular beneficial for those embodiments at which the mantle tappers from the first section to the second section. With the help of the rips, it can be ensured that the stiffness of the mantle remains constant although the mantle surface is reduced from the first section to the second section.

Preferably, said rib extends along the longitudinal axis. According to another preferred embodiment, the mantle comprises four rips, said rips being equidistantly spaced around said mantle. Preferably, the at least one rib is arranged at the inside of said mantle.

According to another preferred embodiment, the mantle comprises at least one groove. The groove is utilized for adjusting the stiffness of the mantle. Like the rips, the groove can also be utilized to compensate for a changing surface area of the mantle from the first section to the second section. Preferably, the groove is arranged at the outside of the mantle. According to yet another preferred embodiment, the groove is arranged adjacent to the at least one rib. Forming a rib at the inside of the mantle may lead to the formation of a groove at the outside.

According to yet another preferred embodiment, the first section comprises a flange section for securing said first section to the rod opening. The flange section is used to ensure a proper sealing of the piston chamber against the surroundings of the housing. According to a preferred embodiment, the flange section comprises a circumferential groove, which is configured to form a seal with the rod opening. With the help of said groove, the rod boot can be easily installed at the housing while it is at the same time ensured that the boot forms a durable connection with the housing.

According to yet another preferred embodiment, the second section comprises a shoulder for engaging with a corresponding shoulder of the piston rod to form a seal therewith. This design ensures a durable connection between the rod boot and the piston root to seal the piston chamber of the actuator.

Preferably, the second section is secured to said piston rod by means of a clamping ring. With the help of said clamping ring, the durability of the connection between rod boot and piston rod is improved.

The invention as herein above has been described according to a first aspect relating to the inventive brake actuator. According to a second aspect, the invention however also relates to a rod boot for sealing a rod opening for a pneumatic brake actuator of a commercial vehicle, wherein said rod boot is configured to be connected to a rod opening and a piston rod, said rod boot comprising a mantle, said mantle having a first section and a second section opposite from the first section, and wherein the first section is connected to a rod opening of a pneumatic brake actuator and the second section is connected to a mounting section of a piston rod of the actuator.

The invention suggests that the second section is inverted inwardly relative to the first section, wherein a longitudinal dimension of the first section and a longitudinal dimension of the second section vary with respect to each other as a function of a relative position of the first section to the second section.

The inventive rod boot accordingly shares the technical advantages and preferred embodiments of the inventive brake actuator. In this regards, reference is made to the description above and the preferred embodiments described therein.

According to a third aspect, the invention relates to the use of a rod boot according to the previous embodiments for sealing a rod opening of a pneumatic brake actuator of a commercial vehicle. The inventive use of a rod boot accordingly shares the technical advantages and preferred embodiments of the inventive brake actuator and the inventive rod boot. In this regard, reference is made to the description above and preferred embodiments described therein. For a more complete understanding of the invention, the invention will now be described in detail with reference of the accompanying drawings. The detailed description will illustrate and describe what is considered as a preferred embodiment of the invention.

The invention is limited only within the scope of the appended claims. In particular, any reference signs in the claims shall not be construed as limiting the scope of the invention. The wording "comprising" does not exclude other elements or steps. The word "a" or "an" does not exclude a plurality.

The invention will now be described with reference to the accompanying drawings which illustrate, by way of example and not by way of limitations, one of several possible embodiments of the spring brake actuator proposed herein, and wherein:
- Fig. 1: shows a preferred embodiment of pneumatic brake actuator according to the concept of the invention in a sectional view, wherein the piston is in a retained position;
- Fig. 2: shows the preferred embodiment of the pneumatic brake actuator according to Fig. 1, wherein the piston is in an extended position;
- Figs. 3, 4: show perspective views of a rod boot according to the concept of the invention.

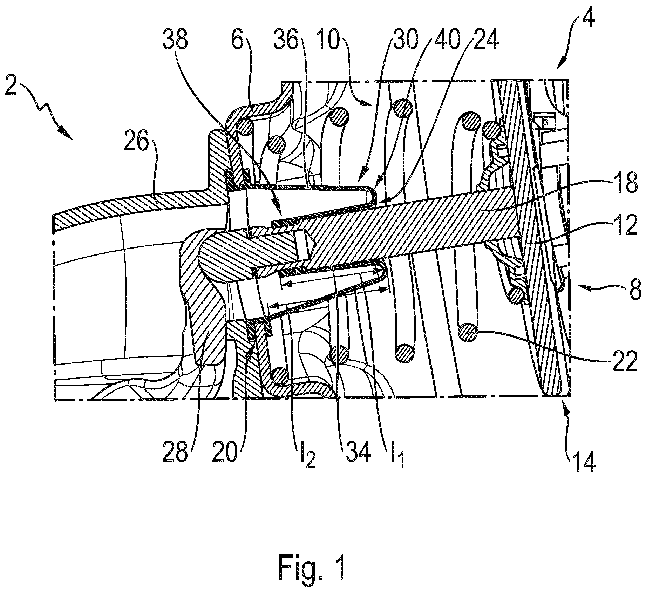

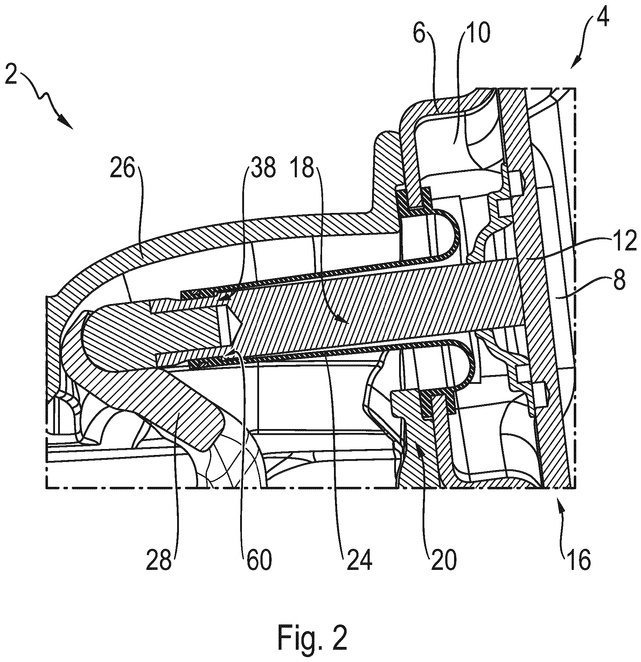

Fig. 1 shows a vehicle braking system 2. The vehicle braking system 2 comprises a pneumatic actuator 4. The pneumatic actuator 4 comprises an actuator housing 6. The actuator housing 6 comprises a pressure chamber 8 and a piston chamber 10. In the piston chamber 10, a piston 12 is mounted. The piston 12 is configured to reciprocatingly move between a retrained position 14 and in extended position 16 (shown in Fig. 2) as a function of pressure inside the pressure chamber 8.

A piston rod 18 is connected to piston 12. The piston rod 18 is guided through and out of the actuator housing 6 via a rod opening 20. The pneumatic brake actuator 4 moreover comprises a compression spring 22. The compression spring 22 is effective to push the piston 12 towards the retained position 14. The pneumatic brake actuator 4 moreover comprises a rod boot 24. The rod boot 24 is configured for sealing the rod opening 20. The rod boot 24 is connected to the rod opening 20 and the piston rod 18.

The rod boot 24 comprises a mantle 30. Said mantle 30 has a first section 34 and a second section 36. The second section 36 is opposite from the first section 34. The first section 36 is connected to the rod opening 20. The second section 36 is connected to a mounting section 38 of the piston rod 18. The second section 36 of the rod boot 24 is inverted inwardly 14 relative to the first section 34. A longitudinal dimension l₁ of the first section 34 and a longitudinal dimension l₂ of the second section 36 vary with respect to each other as a function of a relative position of the first section 34 to the second section 36. The braking system 2 moreover comprises a caliper box 26. In the caliper box 26 a lever 28 is arranged.

Fig. 2 shows the actuator of Fig. 1 in an extended position 16. It can be seen, that the rod boot 24 now extends out of the actuator housing 6 through the rod opening 20 at into the caliper box 26. The volume that is now occupied by the rod boot 24 inside the actuator housing 6 is minimal.

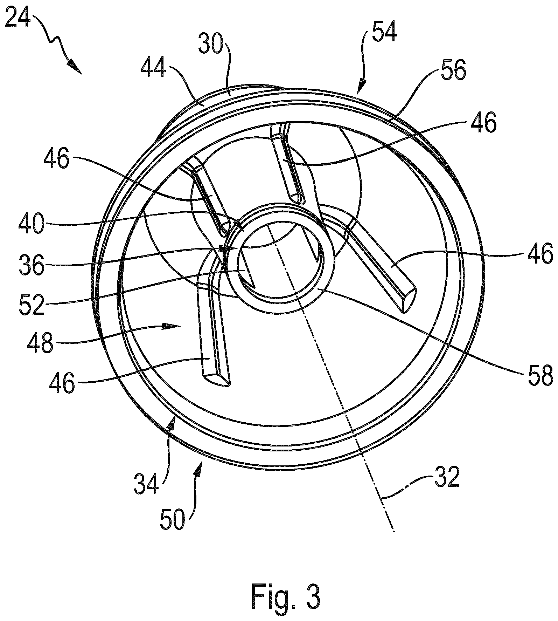

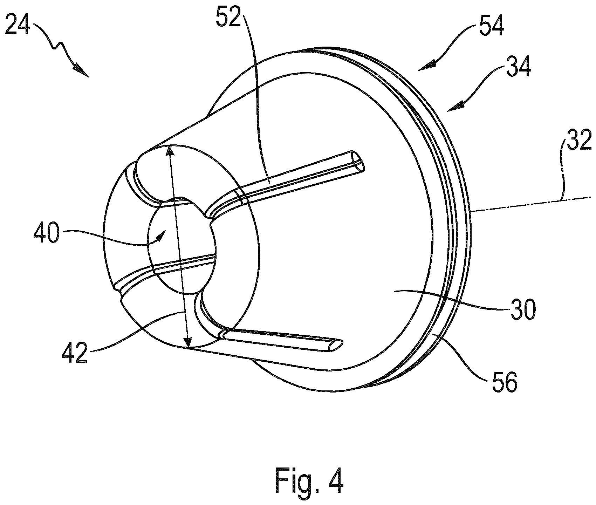

Figs. 3 and 4 show perspective views of the rod boot 24 in perspective views. The rod boot comprises the mantle 30. The diameter 42 of the mantle 30 tapers from the first section 34 to the second section 36. Furthermore, the mantle 30 comprises a varying thickness. The mantle comprises four ribs 46. Said ribs 46 extend along a longitudinal axis 32. The ribs 46 are equidistantly spaced around the mantle 30. The ribs 46 are arranged at the inside 48 of the mantle 30. Furthermore, the mantle comprises groves 52. The groves 52 are arranged at the outside 50 of the mantle 30. The groves 52 are arranged adjacent to the ribs 46. The mantle 30 comprises four groves 52. A rib 46 at the inside 48 of the mantle 30 forms a grove 52 at the outside 50 of the mantle 30. The mantle 30 has a thickness 44.

Furthermore, the first section 34 comprises a flange section 54. The flange section 54 is configured for securing said first section 34 to the rod opening 20. The flange section 54 comprises a circumferential groove 56. The circumferential groove 56 is configured to form a seal with the rod opening 20. The second section 36 comprises a shoulder 58. The shoulder 58 is configured for engaging with a corresponding shoulder 60 (see Figs. 1 and 2) of the piston rod 18, to form a seal therewith.

### List of reference signs (part of the description)

- 2: braking system
- 4: pneumatic brake actuator
- 6: actuator housing
- 8: pressure chamber
- 10: piston chamber
- 12: piston
- 14: retained position
- 16: extended position
- 18: piston rod
- 20: rod opening
- 22: compression spring
- 24: rod boot
- 26: caliper box
- 28: lever
- 30: mantle
- 32: longitudinal axis
- 34: first section
- 36: second section
- 38: mounting section
- 40: inward inversion
- 42: mantle diameter
- 44: mantle thickness
- 46: rib
- 48: mantle inside
- 50: mantle outside
- 52: mantle groove
- 54: flange section
- 56: circumferential groove
- 58: mantle shoulder
- 60: rod shoulder

## Claims

1. A pneumatic brake actuator (4) for a vehicle, in particular a commercial vehicle, comprising:
- an actuator housing (6) having a pressure chamber (8) and a piston chamber (10),
- a piston (12) that is mounted inside the piston chamber (10) and configured to reciprocatingly move between a retained position (14) and an extended position (16) as a function of pressure inside the pressure chamber (8),
- a piston rod (18) connected to the piston (12), wherein said piston rod (18) is guided through the actuator housing (6) via a rod opening (20),
- a compression spring (22) being effective to push the piston (12) towards the retained position (14), and
- a rod boot (24) for sealing the rod opening (20), wherein said rod boot (24) is connected to the rod opening (20) and the piston rod (18),
said rod boot (24) comprising a mantle (30), said mantle (30) having a first section (34) and a second section (36) opposite from the first section (34), and wherein the first section (34) is connected to the rod opening (20) and the second section (36) is connected to a mounting section (38) of the piston rod (18),
**characterized in that** the second section (36) is inverted inwardly (40) relative to the first section (34), wherein a longitudinal dimension (l₁) of the first section (34) and a longitudinal dimension (l₂) of the second section (36) vary with respect to each other as a function of a relative position of the first section (34) to the second section (36).

2. The brake actuator (4) according to claim 1,
wherein the rod boot (24) extends out of the actuator housing (6) through the rod opening (20), when the piston (12) is moved towards its retained position (14).

3. The brake actuator (4) according to claim 1 or 2,
wherein a diameter (42) of the mantle (30) tapers from the first section (34) to the second section (36).

4. The brake actuator (4) according to claim 1 or 2,
wherein the mantle (30) comprises a varying thickness.

5. The brake actuator (4) according to any of the preceding claims, wherein the mantle (30) comprises at least one rib (46).

6. The brake actuator (4) according to claim 5,
wherein said rib (46) extends along the longitudinal axis (32).

7. The brake actuator (4) according to claims 5 or 6,
wherein the mantle (30) comprises four ribs (46), said ribs (46) being equidistantly spaced around said mantle (30).

8. The brake actuator (4) according to claims 5-7,
wherein said at least one rib (46) is arranged at the inside (48) of said mantle (30).

9. The brake actuator (4) according to any of the preceding claims, wherein the mantle (30) comprises at least one groove (52).

10. The brake actuator (4) according to claim 9,
wherein said grove (52) is arranged at the outside (50) of said mantle (30) adjacent to the at least one rib (46).

11. The brake actuator (4) according to any of the preceding claims,
wherein said first section (34) comprises a flange section (54) for securing said first section (34) to the rod opening (20).

12. The brake actuator (4) according to claim 11,
wherein said flange section (54) comprises a circumferential groove (56) configured to form a seal with the rod opening (20).

13. The brake actuator (4) according to any of the preceding claims,
wherein said second section (36) comprises a shoulder (58) for engaging with a corresponding shoulder (60) of the piston rod (18) to form a seal therewith.

14. A rod boot (24) for sealing a rod opening (20) for a pneumatic brake actuator of a commercial vehicle, wherein said rod boot (24) is configured to be connected to a rod opening (20) and a piston rod (18),
said rod boot (24) comprising a mantle (30), said mantle (30) having a first section (34) and a second section (36) opposite from the first section (34), and wherein the first section (36) is connected to a rod opening (20) of a pneumatic brake actuator (4) and the second section (36) is connected to a mounting section (38) of a piston rod (18) of the actuator (4),
**characterized in that** the second section (36) is inverted inwardly (40) relative to the first section (34), wherein a longitudinal dimension (l₁) of the first section (34) and a longitudinal dimension (l₂) of the second section (36) vary with respect to each other as a function of a relative position of the first section (34) to the second section (36).

15. Use of a rod boot (24) according to claim 14 for sealing a rod opening (20) of a pneumatic brake actuator (4) of a commercial vehicle.

## Patentansprüche

1. Druckluftbremszylinder (4) für ein Fahrzeug, insbesondere ein Nutzfahrzeug, umfassend:
- ein Zylindergehäuse (6), das eine Druckkammer (8) und eine Kolbenkammer (10) aufweist,
- einen Kolben (12), der im Inneren der Kolbenkammer (10) montiert ist und konfiguriert ist, um sich in Abhängigkeit von einem Druck in der Druckkammer (8) zwischen einer Halteposition (14) und einer ausgefahrenen Position (16) hin und her zu bewegen,
- eine Kolbenstange (18), die mit dem Kolben (12) verbunden ist, wobei die Kolbenstange (18) über eine Stangenöffnung (20) durch das Zylindergehäuse (6) geführt wird,
- eine Druckfeder (22), die wirksam ist, um den Kolben (12) in Richtung der Halteposition (14) zu drücken, und
- eine Stangenmanschette (24) zum Abdichten der Stangenöffnung (20), wobei die Stangenmanschette (24) mit der Stangenöffnung (20) und der Kolbenstange (18) verbunden ist,
die Stangenmanschette (24) umfassend einen Mantel (30), wobei der Mantel (30) einen ersten Abschnitt (34) und einen zweiten Abschnitt (36) gegenüber des ersten Abschnitts (34) aufweist, und wobei der erste Abschnitt (34) mit der Stangenöffnung (20) verbunden ist und der zweite Abschnitt (36) mit einem Montageabschnitt (38) der Kolbenstange (18) verbunden ist,
**dadurch gekennzeichnet, dass** der zweite Abschnitt (36) relativ zu dem ersten Abschnitt (34) nach innen (40) umgekehrt ist, wobei eine Längsabmessung (l₁) des ersten Abschnitts (34) und eine Längsabmessung (l₂) des zweiten Abschnitts (36) in Abhängigkeit einer relativen Position des ersten Abschnitts (34) zu dem zweiten Abschnitt (36) in Bezug aufeinander variieren.

2. Bremszylinder (4) nach Anspruch 1,
wobei sich die Stangenmanschette (24) aus dem Zylindergehäuse (6) heraus durch die Stangenöffnung (20) erstreckt, wenn der Kolben (12) in Richtung seiner Halteposition (14) bewegt wird.

3. Bremszylinder (4) nach Anspruch 1 oder 2,
wobei sich ein Durchmesser (42) des Mantels (30) von dem ersten Abschnitt (34) zu dem zweiten Abschnitt (36) verjüngt.

4. Bremszylinder (4) nach Anspruch 1 oder 2,
wobei der Mantel (30) eine variierende Dicke aufweist.

5. Bremszylinder (4) nach einem der vorstehenden Ansprüche,
wobei der Mantel (30) mindestens eine Rippe (46) umfasst.

6. Bremszylinder (4) nach Anspruch 5,
wobei sich die Rippe (46) entlang der Längsachse (32) erstreckt.

7. Bremszylinder (4) nach Anspruch 5 oder 6,
wobei der Mantel (30) vier Rippen (46) umfasst, wobei die Rippen (46) gleichmäßig um den Mantel (30) herum beabstandet sind.

8. Bremszylinder (4) nach den Ansprüchen 5 bis 7,
wobei die mindestens eine Rippe (46) an der Innenseite (48) des Mantels (30) angeordnet ist.

9. Bremszylinder (4) nach einem der vorstehenden Ansprüche,
wobei der Mantel (30) mindestens eine Nut (52) umfasst.

10. Bremszylinder (4) nach Anspruch 9,
wobei die Nut (52) an der Außenseite (50) des Mantels (30) angrenzend an die mindestens eine Rippe (46) angeordnet ist.

11. Bremszylinder (4) nach einem der vorstehenden Ansprüche,
wobei der erste Abschnitt (34) einen Flanschabschnitt (54) zum Befestigen des ersten Abschnitts (34) an der Stangenöffnung (20) umfasst.

12. Bremszylinder (4) nach Anspruch 11,
wobei der Flanschabschnitt (54) eine umlaufende Nut (56) aufweist, die konfiguriert ist, um eine Abdichtung mit der Stangenöffnung (20) auszubilden.

13. Bremszylinder (4) nach einem der vorstehenden Ansprüche,
wobei der zweite Abschnitt (36) eine Schulter (58) zum Eingreifen in eine entsprechende Schulter (60) der Kolbenstange (18) umfasst, um damit eine Abdichtung auszubilden.

14. Stangenmanschette (24) zum Abdichten einer Stangenöffnung (20) für einen Druckluftbremszylinder eines Nutzfahrzeugs, wobei die Stangenmanschette (24) konfiguriert ist, um mit einer Stangenöffnung (20) und einer Kolbenstange (18) verbunden zu werden,
die Stangenmanschette (24) umfassend einen Mantel (30), wobei der Mantel (30) einen ersten Abschnitt (34) und einen zweiten Abschnitt (36) gegenüber des ersten Abschnitts (34) aufweist, und
wobei der erste Abschnitt (36) mit einer Stangenöffnung (20) eines Druckluftbremszylinders (4) verbunden ist und der zweite Abschnitt (36) mit einem Montageabschnitt (38) einer Kolbenstange (18) des Zylinders (4) verbunden ist,
**dadurch gekennzeichnet, dass** der zweite Abschnitt (36) relativ zu dem ersten Abschnitt (34) nach innen (40) umgekehrt ist, wobei eine Längsabmessung (l₁) des ersten Abschnitts (34) und eine Längsabmessung (l₂) des zweiten Abschnitts (36) in Abhängigkeit einer relativen Position des ersten Abschnitts (34) zu dem zweiten Abschnitt (36) in Bezug aufeinander variieren.

15. Verwendung einer Stangenmanschette (24) nach Anspruch 14 zum Abdichten einer Stangenöffnung (20) eines Druckluftbremszylinders (4) eines Nutzfahrzeugs.

## Revendications

1. Actionneur de frein pneumatique (4) pour un véhicule, en particulier un véhicule utilitaire, comprenant :
- un boîtier d'actionneur (6) ayant une chambre de pression (8) et une chambre de piston (10),
- un piston (12) qui est monté à l'intérieur de la chambre de piston (10) et conçu pour se déplacer dans un mouvement de va-et-vient entre une position retenue (14) et une position étendue (16) en fonction de la pression à l'intérieur de la chambre de pression (8),
- une tige de piston (18) reliée au piston (12), dans lequel ladite tige de piston (18) est guidée à travers le boîtier d'actionneur (6) par le biais d'une ouverture de tige (20),
- un ressort de compression (22) efficace pour pousser le piston (12) vers la position retenue (14), et
- un soufflet de tige (24) permettant de sceller l'ouverture de tige (20), dans lequel ledit soufflet de tige (24) est relié à l'ouverture de tige (20) et à la tige de piston (18),
ledit soufflet de tige (24) comprenant un manteau (30), ledit manteau (30) ayant une première section (34) et une seconde section (36) opposée à la première section (34), et
dans lequel la première section (34) est reliée à l'ouverture de tige (20) et la seconde section (36) est reliée à une section de montage (38) de la tige de piston (18),
**caractérisé en ce que** la seconde section (36) est inversée vers l'intérieur (40) par rapport à la première section (34), dans lequel une dimension longitudinale (l₁) de la première section (34) et une dimension longitudinale (l₂) de la seconde section (36) varient l'une par rapport à l'autre en fonction d'une position relative de la première section (34) par rapport à la seconde section (36).

2. Actionneur de frein (4) selon la revendication 1,
dans lequel le soufflet de tige (24) s'étend hors du boîtier d'actionneur (6) par l'ouverture de tige (20), lorsque le piston (12) est déplacé vers sa position retenue (14).

3. Actionneur de frein (4) selon la revendication 1 ou 2,
dans lequel un diamètre (42) du manteau (30) se rétrécit de la première section (34) à la seconde section (36).

4. Actionneur de frein (4) selon la revendication 1 ou 2,
dans lequel le manteau (30) comprend une épaisseur variable.

5. Actionneur de frein (4) selon l'une quelconque des revendications précédentes,
dans lequel le manteau (30) comprend au moins une nervure (46).

6. Actionneur de frein (4) selon la revendication 5,
dans lequel ladite nervure (46) s'étend le long de l'axe longitudinal (32).

7. Actionneur de frein (4) selon les revendications 5 ou 6,
dans lequel le manteau (30) comprend quatre nervures (46), lesdites nervures (46) étant espacées de manière équidistante autour dudit manteau (30).

8. Actionneur de frein (4) selon les revendications 5 à 7,
dans lequel ladite au moins une nervure (46) est disposée à l'intérieur (48) dudit manteau (30).

9. Actionneur de frein (4) selon l'une quelconque des revendications précédentes,
dans lequel le manteau (30) comprend au moins une rainure (52).

10. Actionneur de frein (4) selon la revendication 9,
dans lequel ladite rainure (52) est disposée à l'extérieur (50) dudit manteau (30) de manière adjacente à l'au moins une nervure (46).

11. Actionneur de frein (4) selon l'une quelconque des revendications précédentes,
dans lequel ladite première section (34) comprend une section de bride (54) permettant de fixer ladite première section (34) à l'ouverture de tige (20).

12. Actionneur de frein (4) selon la revendication 11,
dans lequel ladite section de bride (54) comprend une rainure circonférentielle (56) conçue pour former un joint avec l'ouverture de tige (20).

13. Actionneur de frein (4) selon l'une quelconque des revendications précédentes,
dans lequel ladite seconde section (36) comprend un épaulement (58) permettant de venir en prise avec un épaulement correspondant (60) de la tige de piston (18) pour former un joint avec celle-ci.

14. Soufflet de tige (24) permettant de sceller une ouverture de tige (20) pour un actionneur de frein pneumatique d'un véhicule utilitaire, dans lequel ledit soufflet de tige (24) est conçu pour être relié à une ouverture de tige (20) et à une tige de piston (18),
ledit soufflet de tige (24) comprenant un manteau (30), ledit manteau (30) ayant une première section (34) et une seconde section (36) opposée à la première section (34), et
dans lequel la première section (36) est reliée à une ouverture de tige (20) d'un actionneur de frein pneumatique (4) et la seconde section (36) est reliée à une section de montage (38) d'une tige de piston (18) de l'actionneur (4),
**caractérisé en ce que** la seconde section (36) est inversée vers l'intérieur (40) par rapport à la première section (34), dans lequel une dimension longitudinale (l₁) de la première section (34) et une dimension longitudinale (l₂) de la seconde section (36) varient l'une par rapport à l'autre en fonction d'une position relative de la première section (34) par rapport à la seconde section (36).

15. Utilisation d'un soufflet de tige (24) selon la revendication 14 permettant de sceller une ouverture de tige (20) d'un actionneur de frein pneumatique (4) d'un véhicule utilitaire.
